# EUROPÄISCHE PATENTANMELDUNG

(11) **EP 1 367 027 A2**
(43) Veröffentlichungstag der Anmeldung: **03.12.2003**
(21) Anmeldenummer: 03405565.7
(22) Anmeldetag: 28.07.2003
(51) Int. Cl.: C03B 33/033, C03B 33/03

(54) **Vorrichtung und Verfahren zum Brechen von geritzten Glasscheiben**

(30) Priorität: 03.10.2002 EP 20021654
(71) Anmelder: Bystronic Maschinen AG, CH-4922 Bützberg (CH)
(72) Erfinder: Rber, Bruno, 4922 Thunstetten (CH); Gfeller, Hans, 4912 Aarwangen (CH)
(74) Vertreter: AMMANN PATENTANWAELTE AG BERN

(57) **Zusammenfassung**

Es werden verschiedene Alternativen von Vorrichtungen angegeben für eine vereinfachte Bearbeitung von Glasscheiben (1), insbesondere für das Schneiden (Fig. 2) und Brechen (Fig. 3) :
a) Die Vorrichtung umfasst eine Unterlage (11; 30a, b; 32) zum Stützen der Glasscheibe (1) sowie Reguliermittel (31a, b), mit welcher die Flexibilität der Unterlage regulierbar ist, sodass beim Schneiden der Glasscheibe die Unterlage zumindest teilweise starr ist und beim Brechen der Glasscheibe die Unterlage zumindest teilweise nachgiebig ist.
b) Die Vorrichtung (18) umfasst einen Körper (60), der zum Brechen der Glasscheibe (1) auf die Oberfläche der Glasscheibe aufsetzbar ist und der um mindestens zwei Achsen frei drehbar gelagert ist.

## Beschreibung

Die Erfindung bezieht sich auf eine Vorrichtung zur Bearbeitung von Glasscheiben gemäss Oberbegriff der unabhängigen Vorrichtungsansprüche.

Die Erfindung bezieht sich ferner auf ein Verfahren gemäss Oberbegriff des unabhängigen Verfahrensanspruchs.

Bei der Bearbeitung von Glasscheiben, wie beispielsweise Automobilscheiben, werden die rohen Glasscheiben in bestimmte Formen geteilt. Dazu werden sie mittels eines Schneidwerkzeuges mit einer Schnittlinie versehen, welche der gewünschten Form entspricht, und dann mithilfe eines Brechwerkzeuges entlang dieser Schnittlinie gebrochen.

In der Patentschrift EP-B-0 401 161 ist eine Vorrichtung beschrieben, welche ein Brechrad zum Brechen einer geschnittenen Glasscheibe aufweist. Dazu wird das Brechrad mit einem bestimmten Druck im Wesentlichen parallel zu der Schnittlinie geführt. Da diese auch gekrümmt sein kann, muss das Brechrad entsprechend ausgerichtet werden können. Dies hat aber den Nachteil, dass eine relativ aufwändige Mechanik nötig ist, um die jeweilige Position und Orientierung des Brechrades anzusteuern.

Im Weiteren muss die Unterlage, welche die Glasscheibe stützt, den Druck auffangen, den das Schneidwerkzeug beim Schneiden auf die Glasscheibe ausübt. Beim Brechen hingegen, darf der abzutrennende Teil der Glasscheibe, damit er mittels des Brechwerkzeugs abgebrochen werden kann, nicht aufliegen. Dazu werden üblicherweise Schablonen verwendet, die der gewünschten Scheibenform entsprechen und zwischen der Unterlage und der geschnittenen Glasscheibe angebracht werden. Dies hat aber den Nachteil, dass jeweils für jede gewünschte Form eine separate Schablone hergestellt werden muss.

Ausgehend von diesem Stand der Technik liegt der vorliegenden Erfindung die Aufgabe zu Grunde, eine Vorrichtung der eingangs erwähnten Art zur Verfügung zu stellen, welche wenigstens teilweise die oben beschriebenen Nachteile behebt und somit eine Vereinfachung der bekannten Vorrichtung darstellt.

Eine erfindungsgemässe Vorrichtung, welche diese Aufgabe löst, ist in einem der unabhängigen Vorrichtungsansprüche angegeben.

Die weiteren Ansprüche geben Verfahren sowie bevorzugte Ausführungen an.

Die erfindungsgemässe Vorrichtung hat den Vorteil, dass sie eine wesentliche Vereinfachung gegenüber bekannten Vorrichtungen darstellt und somit u.a. die Kosten für die Bearbeitung von Glasscheiben reduziert werden können. Weitere Vorteile gehen aus der Beschreibung hervor.

Es sei vorgemerkt, dass in der folgenden Beschreibung und in den Patentansprüchen unter dem Begriff "Glasscheiben" ganz allgemein Glas enthaltende Scheiben oder Platten verstanden werden sollen, wie z.B. einfache Glasscheiben, beschichtete Glasscheiben, Verbundglasscheiben (Glasscheiben mit einer dazwischenliegenden Kunststoffolie), mehrschichtige Verbundglasscheiben, Verbundsicherheitsglasscheiben, etc.

Das Ritzen einer Glasscheibe wird im Folgenden auch als Schneiden der Glasscheibe bezeichnet. Der Begriff "Schnittlinie" ist synonym zu "Ritzlinie".

Die Erfindung wird im Folgenden anhand von bevorzugten Ausführungsbeispielen unter Bezugnahme auf Figuren erläutert. Es zeigen:
- Fig. 1: eine Draufsicht der erfindungsgemässen Anlage,
- Fig. 2: eine Detail-Seitenansicht der Anlage gemäss Fig. 1 beim Schneiden einer Glasscheibe,
- Fig. 3: eine Detail-Seitenansicht der Anlage gemäss Fig. 1 beim Brechen einer Glasscheibe und
- Fig. 4: eine Detail-Seitenansicht einer weiteren Ausführungsform der Anlage beim Brechen einer Glasscheibe.

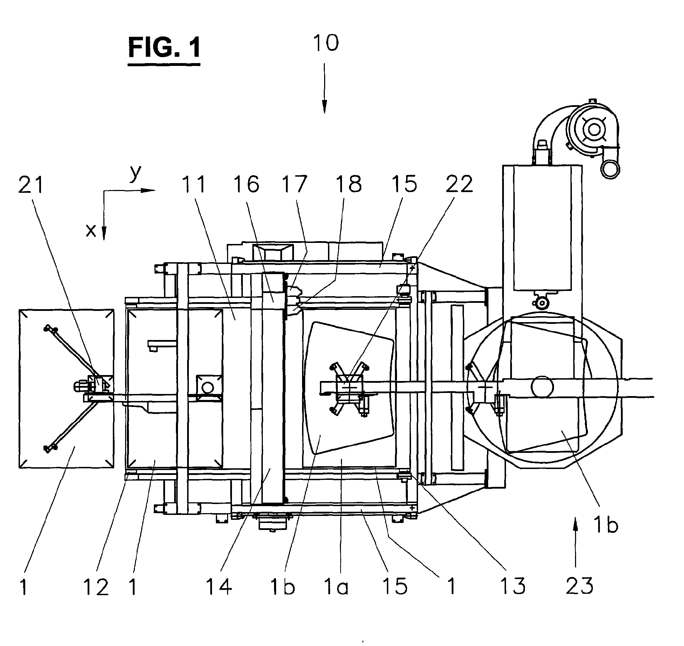

Die in Fig. 1 dargestellte Anlage weist eine Schneid- und Brechstation 10 auf. Es ist ein endloses Förderband 11 vorgesehen, welches um eine Umlenkrolle 12 und eine Antriebsrolle 13 gelegt ist. Das Förderband 11 ist entlang der y-Richtung bewegbar und dient zum Transport der zu bearbeitenden rohen Glasscheiben 1 hin zur Bearbeitungsposition sowie zum Abtransport der abgebrochenen Glasscherben 1a. Das Förderband 11 ist gelocht, sodass die Glasscheibe 1 in der Berabeitungposition durch Erzeugung eines Unterdruckes fest gegen das Förderband 11 angesaugt wird und damit unverrückbar festgehalten wird.

Oberhalb des Förderbandes 11 ist eine Schneidbrücke 14 angeordnet, die geführt auf Führungsschienen 15 entlang der y-Richtung verfahrbar ist. Auf der Schneidbrücke 14 befindet sich ein Bearbeitungskopf 16, welcher entlang der x-Richtung verfahrbar ist. Der Bearbeitungskopf 16 weist eine Schneidsowie Brecheinrichtung auf 17 bzw. 18. Die Bewegung der Schneidbrücke 14 und des Bearbeitungskopfes 16 erfolgt durch eine CNC-Steuerung (nicht dargestellt), sodass zur Bearbeitung einer Glasscheibe die Schneid- und Brecheinrichtung 17 bzw. 18 präzise in der xy-Ebene sowie in vertikaler Richtung verfahren werden können. Somit lässt sich aus einer rohen Glasscheibe 1 eine Scheibe 1b mit einer beliebigen Kontur herausbrechen.

Am vorderen Ende der Schneid- und Brechstation 10 ist eine erste Übersetzvorrichtung 21 vorgesehen, mit welcher die rohen Glasscheiben 1 auf das Förderband 11 aufgesetzt werden können. Am hinteren Ende der Schneid- und Brechstation 10 ist ein zweite Übersetzvorrichtung 22 vorgesehen, mit welcher die herausgebrochene Glasscheibe 1b wegtransportiert werden kann. So wird diese beispielsweise zur Bearbeitung ihres Randes auf eine Schleifstation 23 übergesetzt, die anschliessend an die Schneid- und Brechstation 10 angeordnet ist.

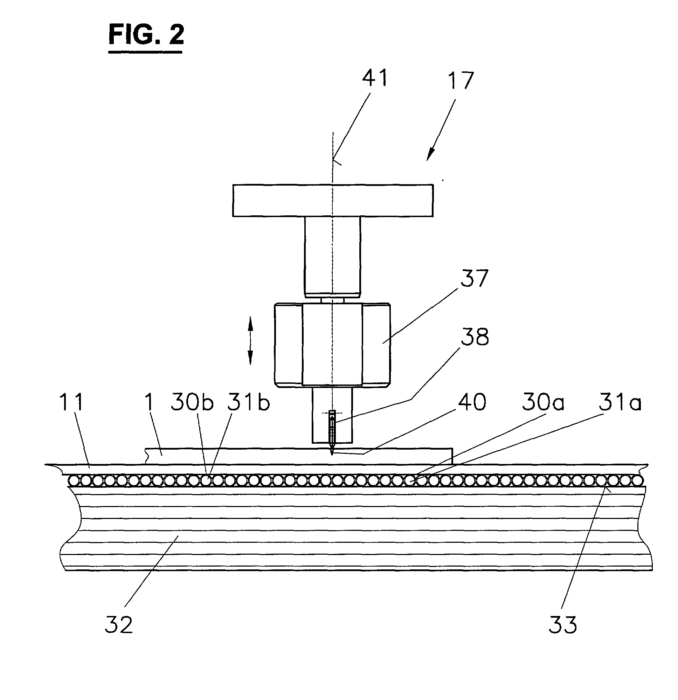

Fig. 2 zeigt eine Seitenansicht der Unterlage, welche die zu bearbeitende Glasscheibe 1 stützt. Die Glasscheibe 1 liegt direkt auf dem Förderband 11 auf, welches beispielsweise aus gummiartigem Material in Form einer Matte besteht.

Auf der Unterseite des Förderbandes 11 sind eine Vielzahl von Schläuchen 30a und 30b angeordnet, die jeweils einen flexiblen Kanal mit einem Hohlraum 31a bzw. 31b bilden und die im Wesentlichen quer zum Förderband 11 verlaufen. Die Schläuche 30a und 30b sind relativ elastisch und bestehen beispielsweise aus einem geeigneten Kunststoff. Die Hohlräume 31a und 31b der Schläuche lassen sich mit Druckluft füllen, wozu beispielsweise ein Kompressor (nicht dargestellt) verwendet wird. Bei genügend hohem Luftdruck in den Hohlräumen 31a und 31b sind die Schläuche 30a und 30b kaum mehr kompressibel und bilden so eine relativ harte Fläche. Die Schläuche 30a und 30b sind auf einer harten Tischplatte 32 fixiert, die beispielsweise aus Metall besteht.

Oberhalb des Förderbandes 11 ist der Bearbeitungskopf 16 mit dem Schneid- und Brechwerkzeug 17 bzw. 18 angeordnet. Das Schneidwerkzeug 17 umfasst den Schneidkopf 37, der in vertikaler Richtung verfahrbar ist, sodass er auf die Oberfläche der Glasscheibe 1 aufgesetzt werden kann. Am unteren Ende des Schneidkopfes befindet sich ein Schneidrad 38, mittels welches die zu bearbeitende Glasscheibe 1 mit Schnittlinien 40 versehen wird.

Der Schneidkopf 37 ist um eine vertikale Achse 41 drehbar gelagert, wobei die jeweilige Orientierung des Schneidkopfes 37 und somit des Schneidrades 38 mittels eines Antriebes (nicht dargestellt) angesteuert werden kann. Dadurch lässt sich das Schneidrad 38 im Wesentlichen parallel zu der gewünschten Kontur der Schnittlinie 40 ausrichten, wobei zum Abfahren der Schnittlinie 40 die Schneidbrücke 14 und der Bearbeitungskopf 16 in y- bzw. x-Richtung entsprechend bewegt werden.

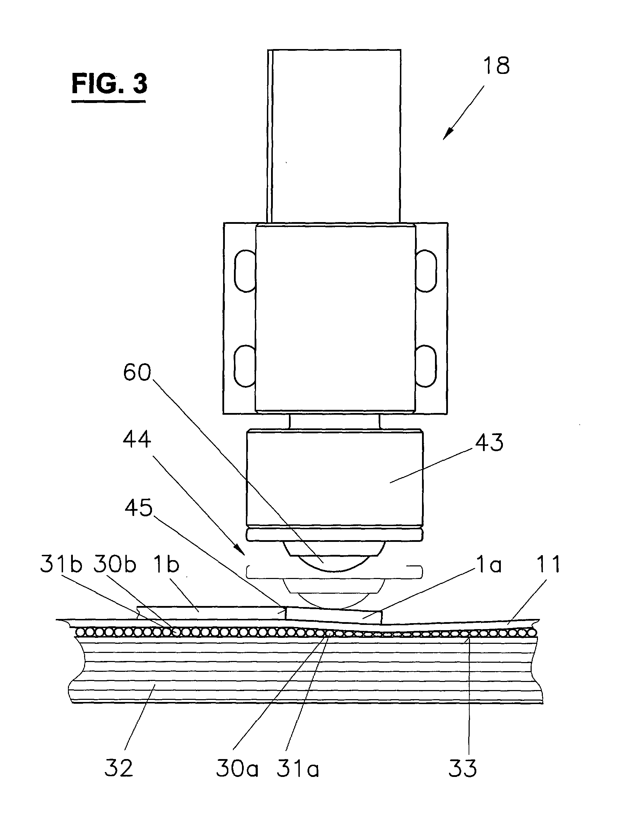

Fig. 3 zeigt eine Seitenansicht des Brechwerkzeuges 18, mit welchem sich Teile 1a der geschnittenen Glasscheibe 1 abbrechen lassen. Das Brechwerkzeug 18 ist zusammen mit dem Schneidwerkzeug 17 auf dem Bearbeitungskopf 16 angeordnet und lässt sich somit ebenfalls in der xy-Ebene verfahren. Zusätzlich ist es ist in vertikaler Richtung verfahrbar. Der Brechkopf 43 des Brechwerkzeuges 18 lässt sich dabei mit einem bestimmten Druck auf den abzutrennenden Teil 1a der Glasscheibe 1 pressen, wie dies durch die Linien 44 dargestellt ist.

Die in Fig. 3 gezeigte Unterlage 30a, 30b, 32, welche die zu bearbeitende Glasscheibe 1 stützt, ist dieselbe wie die in Fig. 2 dargestellte Unterlage. Beim Brechen der Glasscheibe 1 hingegen entspricht der Luftdruck in den Schläuchen 30a, 30b im Wesentlichen dem Normaldruck der Umgebung, sodass sie relativ flexibel sind und somit der Brechkopf 43 ein gewisses Biegemoment auf den abzutrennenden Teil 1a der Glasscheibe 1 ausüben kann.

Mit der hier dargestellten Anlage lässt sich folgendes Verfahren durchführen.

Die rohe Glasscheibe 1 wird vorpositioniert und mittels der ersten Übersetzvorrichtung 21 auf das Förderband 11 aufgesetzt und dort festgesaugt. Dieses wird um eine bestimmte Länge in y-Richtung bewegt, bis die Glasscheibe 1 die Bearbeitungsposition erreicht hat.

Druckluft wird in die Schläuche 30a und 30b gepresst, sodass durch den Druck in den Hohlräumen 31a und 31b eine relativ harte Unterlage ausgebildet wird, welche sich unter dem Druck nicht verformt, den das Schneidwerkzeug 17 beim Schneiden auf die Glasscheibe 1 ausübt. Das Schneidwerkzeug 17 wird dazu auf die Oberfläche der Glasscheibe 1 aufgesetzt und versieht dann diese mit den gewünschten Schnittlinien 40. Dabei wird die Orientierung des Schneidkopfes 37 um die vertikale Achse 41 entsprechend angesteuert und der Bearbeitungskopf 16 in der xy-Ebene verfahren.

Zum Brechen bleibt die Glasscheibe 1 an derselben Position belassen wie beim Schneidvorgang. Durch Ablassen von Luft wird der Überdruck in den Schläuchen 30a und 30b ausgeglichen, sodass sie nun relativ nachgiebig sind.

Um den Brechvorgang zu unterstützen, insbesondere beim Brechen entlang von Schnittlinien, die im Wesentlichen quer zum Förderband 11 verlaufen, ist es auch möglich die Flexibilität der Unterlage nur partiell zu verändern. Der Luftdruck wird vor allem in denjenigen Schläuchen 30a ausgeglichen, die sich unterhalb des abzubrechenden Randes 1a der Glasscheibe 1 befinden. Der Überdruck wird hingegen in denjenigen Schläuchen 30b belassen, welche im Wesentlichen den Teil 1b der Glasscheibe 1 stützen, der weiterverwendet wird.

Der Brechkopf 43 wird auf die Oberfläche der Glasscheibe 1 aufgesetzt und mit einem bestimmten Druck längs des Umfangs der geschnittenen Glasscheibe geführt. Da die Schläuche 30a und 30b nun relativ leicht zusammengequetscht werden können, wie dies in Fig. 3 schematisch dargestellt ist, gibt das Randteil 1a der Glasscheibe 1 unter dem Druck des Brechwerkzeuges 18 nach, wobei sich der Bruch 45 von der mit den Schnittlinien 40 versehenen Oberfläche zur gegenüberliegenden Glasscheiben-Oberfläche fortpflanzt.

Die Glasscheibe 1b wird daraufhin mit der zweiten Übersetzvorrichtung 22 wegtransportiert, beispielsweise zur Weiterverarbeitung an einer Schleifstation 23. Die Glasscherben vom abgebrochenen Randteil 1a bleiben dabei auf dem Förderband 11 zurück. Dieses wird beim nächsten Arbeitsgang in y-Richtung bewegt, sodass die Glasscherben über die Antriebsrolle 13 hinweg nach unten fallen und in einem Behälter aufgefangen werden.

Die beschriebene Anlage bringt wesentliche Vorteile mit sich:
- Für das Abbrechen des Glasscheibenrandes sind keine Schablonen mehr nötig. Somit können die Bearbeitungskosten erheblich gesenkt werden.
- Die Glasscheiben können bei gleichbleibender Bearbeitungsposition sowohl geschnitten als auch gebrochen werden. Dadurch entfällt ein Neupositionieren der Glasscheiben zwischen den beiden Arbeitsgängen, was eine präzisere Bearbeitung der Glasscheiben ermöglicht.
- Glasscheiben mit verschiedenen Dicken können mit derselben Anlage bearbeitet werden. Die Härte bzw. Nachgiebigkeit der Unterlage lässt sich durch entsprechende Regulierung des Luftdruckes geeignet an die Dicke der Glasscheibe anpassen.

Weitere Ausführungsformen einer Unterlage, deren Flexibilität regulierbar ist, wird in den folgenden Abschnitten a) bis e) beschrieben.

a) Es werden Schläuche verwendet, die relativ elastisch und dünnwandig sind. Beim Schneiden werden diese durch das Eigengewicht der Glasscheibe zusammengequetscht, sodass der Druck, den das Schneidwerkzeug ausübt, im Wesentlichen direkt durch die Tischplatte aufgefangen wird. Damit die Schläuche komprimiert werden können, sind die Hohlräume mit der Umgebungsluft verbunden, wodurch ein Druckausgleich ermöglicht wird.

Beim Brechen werden dann die Schläuche mit Luft gefüllt, sodass sie ein relativ flexibles Luftpolster zwischen der Glasscheibe und der Tischplatte bilden.

b) Anstelle von Luft können zum Befüllen der Hohlräume 31a, 31b auch andere Arten von Gasen oder auch flüssige Medien (z.B. Wasser) verwendet werden, und durch Regulation des Druckes in den Hohlräumen kann die Flexibilität der Unterlage gesteuert werden.

c) Anstelle der Schläuche 30a, 30b ist die Tischplatte in x-und y-Richtung mit einer Vielzahl von kleinen Zapfen versehen, die aus einem nachgiebigen Material, beispielsweise Kunststoff, bestehen. Die Zapfen sind in vertikaler Richtung verschiebbar, wobei das jeweilige Zapfenende etwa auf derselben Höhe der Tischplatten-Oberseite 33 bzw. in einem bestimmten Abstand darüber zu liegen kommt.

Beim Schneidevorgang sind die Zapfen in der Tischplatte 32 versenkt, sodass diese den Druck des Schneidwerkzeuges 17 auffängt. Für das Brechen der Glasscheibe 1 werden die Zapfen aus der Tischplatte 32 herausgefahren und gegen die Glasscheibe 1 geführt, wodurch diese etwas angehoben wird. Beim Brechvorgang wird sie somit durch eine relativ flexible Unterlage gestützt, die durch die Zapfen gebildet wird.

d) Eine weitere Ausführungsform einer Unterlage mit regulierbarer Flexibilität ergibt sich durch die Verwendung einer elektrorheologischen oder magnetorheologischen Flüssigkeit. Diese zeichnen sich dadurch aus, dass sie sich bei Abwesenheit eines elektrischen bzw. magnetischen Feldes wie eine Flüssigkeit verhalten (im Folgenden "L-Phase" genannt). Beim Einschalten des elektrischen bzw. magnetischen Feldes hingegen nehmen sie Eigenschaften eines Festkörper an (im Folgenden "S-Phase" genannt). Das Umschalten zwischen den beiden Phasen geschieht dabei im Bereich von Millisekunden.

Die physikalischen Parameter von elektrorheologischen Flüssigkeiten haben typischerweise folgende Werte:
- Maximal anlegbares elektrisches Feld: ca. 5 kV/mm
- maximale Fliessspannung (mechanische Belastung, bei welcher die Flüssigkeit in der S-Phase zu fliessen beginnt): 1-5 kPa
- Viskosität: 0.1-1.0 Pas
- Dichte: 1-2 g/cm³

Die physikalischen Parameter von magnetorheologischen Flüssigkeiten haben typischerweise folgende Werte:
- Maximal anlegbares magnetisches Feld: ca. 250 kA/m
- maximale Fliessspannung: 50-100 kPa
- Viskosität: 0.1-1.0 Pas
- Dichte: 3-4 g/cm³

Der Wert der Fliessspannung lässt sich durch Anlegen eines entsprechenden elektrischen bzw. magnetischen Feldes zwischen Null und dem maximalen Wert einstellen.

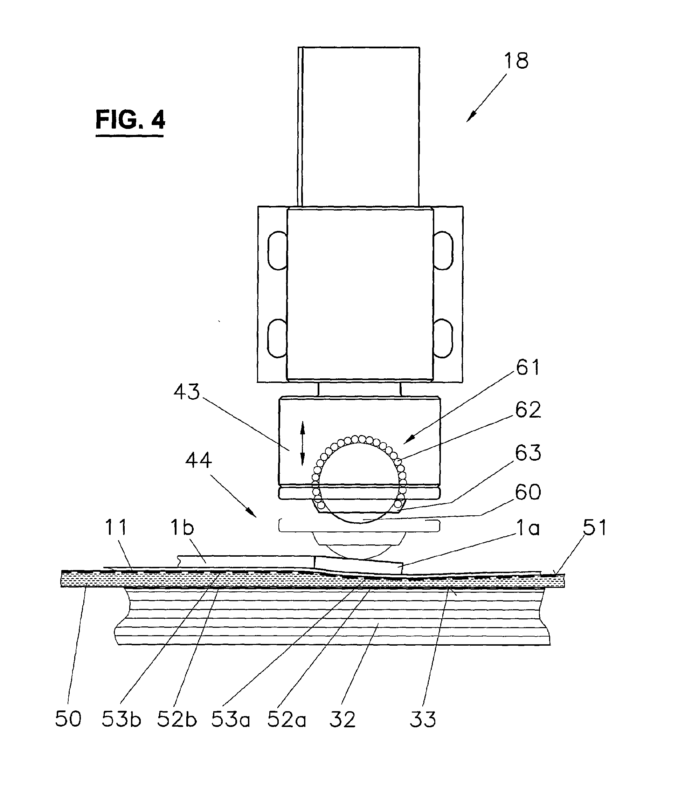

Wie in Fig. 4 schematisch darstellt, ist zwischen dem Förderband 11 und der Tischplatte 32 eine elektrorheologische oder eine magnetorheologische Flüssigkeit 50 angeordnet, die sich in einer relativ elastischen Hülle 51 befindet.

Geeignete elektrorheologische und magnetorheologische Flüssigkeiten sind z.B. erhältlich bei Lord Corporation, 406 Gregson Drive, Cary, NC 27511, USA oder bei Bayer AG, D-51368 Leverkusen, Deutschland.

Ein elektrisches Feld lässt sich mit metallene Plättchen-Paaren erzeugen, die jeweils als Anode bzw. Kathode dienen.

Die Tischplatte 32 ist auf ihrer Oberseite in x- und y-Richtung mit einer Reihe der Plättchen 52a, 52b versehen, an welche beispielsweise eine negative elektrische Spannung angelegt werden kann. Analog ist die Oberseite der Hülle 51 in x- und y-Richtung mit Plättchen 53a, 53b versehen, an welche eine positive elektrische Spannung angelegt werden kann.

Für den Schneidevorgang wird durch Anlegen einer elektrischen Spannung zwischen den einzelnen Plättchen-Paaren 52a, b und 53a, b ein elektrisches Feld erzeugt, wodurch die elektrorheologische Flüssigkeit 50 in die S-Phase übergeht und somit eine relative harte Unterlage entsteht. Vor dem Brechen der Glasscheibe 1 wird die elektrische Spannung weggenommen und die elektrorheologische Flüssigkeit 50 geht in die L-Phase über, sodass die Unterlage relativ flexibel ist.

Da eine Vielzahl von Plättchen-Paaren verwendet wird, ist die Flexibilität der Unterlage partiell regulierbar. Beim Brechen der Glasscheibe 1 wird beispielsweise die Spannung zwischen denjenigen Plättchen-Paaren 52a und 53a auf Null gesetzt, welche sich im Wesentlichen unterhalb des abzubrechenden Glasscheibenrandes 1a befinden. Die Spannung wird hingegen zwischen denjenigen Plättchen-Paaren 52b und 53b belassen, welche im Wesentlichen den herausgebrochenen Teil 1b der Glasscheibe stützen. Da dieser somit beim Brechvorgang durch eine relativ harte Unterlage gestützt ist, entsteht ein besonders sauberer Bruch.

Wird eine magnetorheologische Flüssigkeit verwendet, so lässt sich ein geeignetes magnetisches Feld beispielsweise durch eine Vielzahl von Stromschleifen oder Spulen erzeugen, mit welchen die magnetorheologische Flüssigkeit 50 in x- und y-Richtung durchsetzt ist. Analog wie oben beschrieben lässt sich durch Anlegen eines Stromes an die jeweiligen Stromschleifen bzw. Spulen die Flexibilität der Unterlage partiell regulieren.

e) Anstelle einer elektrorheologischen oder magnetorheologischen Flüssigkeit 50 ist es auch denkbar, ein Medium wie beispielsweise Wasser zu verwenden und mittels Kühl- und Heizmittel den Übergang zwischen flüssiger und fester Phase zu steuern. Beim Schneidvorgang ist das Medium in der festen Phase, sodass die Unterlage, welche die Glasscheibe stützt relativ hart ist. Für den Brechvorgang wird das Medium durch Zuführen von Energie in die flüssige Phase übergeführt und so eine weiche, nachgiebige Unterlage geschaffen.

Im Folgenden wird das in den Figuren 3 und 4 dargestellte Brechwerkzeug 18 detaillierter beschrieben. Das Brechwerkzeug 18 weist am unteren Ende einen Brechkopf 43 auf, der in vertikaler Richtung mittels eines Antriebes verfahrbar ist. Der Brechkopf 43 umfasst eine Kugel 60 sowie ein Kugellager 61. Dieses weist seinerseits eine Reihe von kleineren Kugeln 62 auf, über welche die Kugel 60 hinweggleiten kann. Am unteren Ende des Brechkopfes 43 ist ein Ring 63 montiert, welcher das Herausfallen des Kugellagers 61 sowie der Kugel 60 verhindert.

Mittels des Kugellagers 61 ist die Kugel 60 frei drehbar gelagert und lässt sich insbesondere um die x- sowie y-Achse frei drehen. Dies hat gegenüber den bekannten, mit einem Brechrad versehenen Brechwerkzeugen den Vorteil, dass kein Antrieb mehr benötigt wird, welcher den Brechkopf entlang der vertikalen Achse ausrichtet.

Der Durchmesser der Kugel 60 liegt vorzugsweise im Bereich von 10 mm bis 100 mm und ist beispielsweise ca. 30 mm gross.

Die Kugel 60 weist eine Oberfläche auf, die härter als Glas ist. Geeignet ist beispielsweise eine Kugel aus Stahl. Zusätzlich kann die Oberfläche der Kugel 60 noch mit einer harten Schicht versehen sein, wie beispielsweise Balinit® (Balzers Inc., USA). Die Balinit-Schicht weist eine Dicke von typischerweise einigen Mikrometer auf und hat eine Vickers-Härte von über 1500 HV 0.05 (Vickers-Härte gemessen mit einer Prüfkraft von 0.05 Pond entsprechend 0.49 N). Balinit-Schichten aus verschiedenen Materialien sind erhältlich: CrN (Härte von ca. 1750 HV 0.05), TiN (ca. 2300 HV 0.05), TiCN (ca. 3000 HV 0.05), TiAlN (ca. 3300 HV 0.05).

Zum Brechen einer geschnittenen Glasscheibe 1 wird die Kugel 60 mit einem bestimmten Druck gegen die Glasscheibe 1 gepresst und längs ihres Umfangs geführt durch entsprechende Steuerung des Brechwerkzeuges 18 in der xy-Ebene. Dabei rollt die frei drehbare Kugel 60 über die Oberfläche der Glasscheibe 1, ohne dass ihre Orientierung irgendwie angesteuert zu werden braucht, wie dies bei einem Brechrad nötig wäre. Die Steuerung der Kugel 60 kann daher gegenüber den bekannten Vorrichtungen erheblich vereinfacht werden.

Selbstverständlich ist der Einsatz des in Fig. 4 dargestellten Brechwerkzeugs 18 nicht auf Anlagen mit den oben beschriebenen Unterlagen beschränkt. Ganz allgemein kann zum Brechen einer Glasscheibe anstelle eines Brechrades das Brechwerkzeug 18 gemäss Fig. 4 verwendet werden, z.B. bei den Verfahren, bei welchen die Glasscheibe mit einer Schablone der gewünschten Form unterlegt wird, sodass der abzutrennende Teil der Glasscheibe nicht aufliegt und mittels des Brechwerkzeugs 18 abgebrochen werden kann.

### Bezugszeichenliste

- 1: Glasscheibe
- 1a: Teil der geschnittenen Glasscheibe 20, der abgebrochen wird
- 1b: Teil der geschnittenen Glasscheibe 20, der der gewünschten Form entspricht und weiterverwendet wird
- 10: Schneid- und Brechstation
- 11: Förderband
- 12: Umlenkrolle
- 13: Antriebsrolle
- 14: Schneidbrücke
- 15: Führungsschiene
- 16: Bearbeitungskopf
- 17: Schneideinrichtung
- 18: Brecheinrichtung
- 21: Erste Übersetzvorrichtung
- 22: Zweite Übersetzvorrichtung
- 23: Schleifstation
- 30a: Schlauch
- 30b: Schlauch
- 31a: Hohlraum von Schlauch 30a
- 31b: Hohlraum von Schlauch 30b
- 32: Tischplatte
- 33: Oberseite der Tischplatte
- 37: Schneidkopf
- 38: Schneidrad
- 40: Schnittlinie
- 41: vertikale Achse
- 43: Brechkopf
- 44: Vertikale Position des Brechkopfs 43 beim Brechen der Glasscheibe
- 45: Bruchlinie
- 50: Elektro-/ Magnetorheologische Flüssigkeit
- 51: Hülle
- 52a: Plättchen (Kathode)
- 52b: Plättchen (Kathode)
- 53a: Plättchen (Anode)
- 53b: Plättchen (Anode)
- 60: Kugel
- 61: Kugellager
- 62: Kugel des Kugellagers 61
- 63: Ring

## Patentansprüche

1. Vorrichtung zur Bearbeitung einer Glasscheibe (1) mit einem Brechwerkzeug (18), das einen Körper (60) aufweist, der zum Brechen der Glasscheibe auf die Oberfläche der Glasscheibe aufsetzbar ist, **dadurch gekennzeichnet, dass**
der Körper um mindestens zwei Achsen (x, y) frei drehbar gelagert ist.

2. Vorrichtung gemäss Anspruch 1, **dadurch gekennzeichnet, dass** der Körper (60) kugelförmig ist.

3. Vorrichtung gemäss Anspruch 1 oder 2, **dadurch gekennzeichnet, dass** der Körper (60) mittels eines Kugellagers (61, 62) gelagert ist.

4. Vorrichtung gemäss einem der Ansprüche 1 bis 3, **dadurch gekennzeichnet, dass** der Körper (60) eine Oberfläche aus Hart-Metall aufweist.

5. Vorrichtung gemäss einem der Ansprüche 1 bis 4, **dadurch gekennzeichnet, dass** das Brechwerkzeug (18) entlang mindestens zweier Achsen (x, y) verfahrbar ist, sodass der Körper (60) zum Brechen entlang der Oberfläche der Glasscheibe (1) verfahrbar ist.

6. Vorrichtung zum Stützen einer Glasscheibe (1) bei deren Bearbeitung, insbesondere beim Schneiden und Brechen, welche Vorrichtung eine Unterlage (11; 30a, b; 32; 50) zum Stützen der Glasscheibe umfasst, **dadurch gekennzeichnet, dass**
die Vorrichtung ferner Reguliermittel (31a, b; 52a, b; 53a, b) aufweist, mit welcher die Flexibilität der Unterlage regulierbar ist, sodass beim Schneiden der Glasscheibe die Unterlage zumindest teilweise starr ist und beim Brechen der Glasscheibe die Unterlage zumindest teilweise nachgiebig ist.

7. Vorrichtung gemäss Anspruch 6, **dadurch gekennzeichnet, dass** die Reguliermittel mindestens einen Hohlraum (31a, b) und ein gasförmiges oder flüssiges Medium umfassen, mit welchem der Hohlraum gefüllt werden kann.

8. Vorrichtung gemäss Anspruch 7, **dadurch gekennzeichnet, dass** der Hohlraum durch einen flexiblen Kanal (30a, b) gebildet wird.

9. Vorrichtung gemäss Anspruch 6, **dadurch gekennzeichnet, dass** die Reguliermittel ein Medium (50) umfassen, deren mechanischen Eigenschaften durch Anlegen eines elektrischen oder magnetischen Feldes veränderbar sind.

10. Vorrichtung gemäss Anspruch 6, **dadurch gekennzeichnet, dass** die Reguliermittel ein Medium sowie Kühl- und Heizmittel umfassen, mit welchen ein Phasenübergang des Mediums erzeugbar ist.

11. Vorrichtung gemäss Anspruch 6, **dadurch gekennzeichnet, dass** die Reguliermittel eine Vielzahl von Elementen aus nachgiebigem Material umfassen, die gegen die Glasscheibe (1) führbar sind.

12. Vorrichtung gemäss einem der Ansprüche 6 bis 11, **dadurch gekennzeichnet, dass** die Unterlage eine Matte (11) aus einem nachgiebigen Material umfasst, wobei die Matte vorzugsweise gelocht ist.

13. Verfahren zur Bearbeitung von Glasscheiben (1), wobei die Glasscheibe beim Schneiden und Brechen durch eine Unterlage (11; 30a, b; 32; 50) gestützt wird, **dadurch gekennzeichnet, dass**
die Flexibilität der Unterlage verändert wird, sodass beim Schneiden der Glasscheibe die Unterlage zumindest teilweise starr ist, und beim Brechen der Glasscheibe die Unterlage zumindest teilweise nachgiebig ist.

14. Verfahren nach Anspruch 13, **dadurch gekennzeichnet, dass** die Flexibilität der Unterlage mittels mindestens eines Hohlraumes (31a, b) reguliert wird, indem ein gasförmiges oder flüssiges Medium in den Hohlraum hinein oder aus diesem hinaus befördert wird.

15. Verfahren nach einem der Ansprüche 13 bis 14, **dadurch gekennzeichnet, dass** die Glasscheibe (1) bei gleichbleibender Position geschnitten und gebrochen wird.

16. Verfahren nach einem der Ansprüche 13 bis 15, **dadurch gekennzeichnet, dass** die Glasscheibe vor dem Schneiden und Brechen auf eine Matte (11) durch Unterdruck aufgespannt wird.
